# EUROPÄISCHE PATENTANMELDUNG

(11) **EP 1 865 222 A1**
(43) Veröffentlichungstag der Anmeldung: **12.12.2007**
(21) Anmeldenummer: 07010299.1
(22) Anmeldetag: 24.05.2007
(51) Int. Cl.: F16F 15/14

(54) **Fliehkraftpendeleinrichtung**

(30) Priorität: 10.06.2006 DE 102006026976
(71) Anmelder: LuK Lamellen und Kupplungsbau Beteiligungs KG, 77815 Bühl (DE)
(72) Erfinder: Züfle, Markus, 77815 Bühl (DE)

(57) **Zusammenfassung**

Die Erfindung betrifft eine Fliehkraftpendeleinrichtung mit einer Pendelmassenträgereinrichtung (2), an der mehrere Pendelmassen (11-14,21,23) mit Hilfe von Laufrollen (25,26,35,36) relativ zu der Pendelmassenträgereinrichtung bewegbar angebracht sind.

Die Erfindung zeichnet sich dadurch aus, dass die Laufrollen mit mindestens einem O-Ring (74,75) ausgestattet sind, der an einer zugehörigen Pendelmasse zur Anlage kommt.

## Beschreibung

Die Erfindung betrifft eine Fliehkraftpendeleinrichtung mit einer Pendelmassenträgereinrichtung, an der mehrere Pendelmassen mit Hilfe von Laufrollen relativ zu der Pendelmassenträgereinrichtung bewegbar angebracht sind. Die Erfindung betrifft des Weiteren eine Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und mit einem Getriebe mit mindestens einer Getriebeeingangswelle und mit mindestens einer Kupplungseinrichtung und/oder mit mindestens einer Drehschwingungsdämpfungseinrichtung.

Aufgabe der Erfindung ist es, eine Fliehkraftpendeleinrichtung gemäß dem Oberbegriff des Anspruchs 1, insbesondere im Hinblick auf die im Betrieb auftretende Geräuschentwicklung, zu optimieren.

Die Aufgabe ist bei einer Fliehkraftpendeleinrichtung mit einer Pendelmassenträgereinrichtung, an der mehrere Pendelmassen mit Hilfe von Laufrollen relativ zu der Pendelmassenträgereinrichtung bewegbar angebracht sind, dadurch gelöst, dass die Laufrollen mit mindestens einem O-Ring ausgestattet sind, der an einer zugehörigen Pendel masse zur Anlage kommt. Der O-Ring ist aus einem elastischen Kunststoffmaterial, insbesondere aus einem Elastomer, wie Gummi, gebildet. Durch den O-Ring wird ein Anschlagen der Pendelmassen an den Laufrollen, und umgekehrt gedämpft. Dadurch können unerwünschte Klappergeräusche unterdrückt werden.

Ein bevorzugtes Ausführungsbeispiel der Fliehkraftpendeleinrichtung ist dadurch gekennzeichnet, dass die Laufrollen jeweils einen Mittenabschnitt aufweisen, der sich durch die Pendelmassenträgereinrichtung hindurch erstreckt und von dem sich zwei Endabschnitte, die jeweils mit einem O-Ring ausgestattet sind, in zugehörige Pendel massen hinein erstrecken. Die Endabschnitte der Laufrollen sind jeweils an Laufflächen geführt, die in Langlöchern der Pendelmassen ausgebildet sind.

Ein weiteres bevorzugtes Ausführungsbeispiel der Fliehkraftpendeleinrichtung ist dadurch gekennzeichnet, dass die O-Ringe jeweils in einer Ringnut angeordnet sind, die in den Endabschnitten vorgesehen ist. Die Ringnut ist vorzugsweise jeweils in der Nähe des freien Endes des zugehörigen Endabschnitts angeordnet.

Ein weiteres bevorzugtes Ausführungsbeispiel der Fliehkraftpendeleinrichtung ist dadurch gekennzeichnet, dass der Außendurchmesser der O-Ringe größer als der Außendurchmesser der Endabschnitte ist. Dadurch wird sichergestellt, dass der O-Ring radial nach außen aus der zugehörigen Ringnut heraus ragt.

Ein weiteres bevorzugtes Ausführungsbeispiel der Fliehkraftpendeleinrichtung ist dadurch gekennzeichnet, dass der Außendurchmesser der O-Ringe um etwa 0,4 mm größer als der Außendurchmesser der Endabschnitte ist. Dieser Wert ist materialabhängig und hat sich im Rahmen der vorliegenden Erfindung als besonders vorteilhaft erwiesen. Ein bevorzugter Bereich liegt zwischen 0,2 und 0,6 mm.

Ein weiteres bevorzugtes Ausführungsbeispiel der Fliehkraftpendeleinrichtung ist dadurch gekennzeichnet, dass die Dicke der O-Ringe größer als die Tiefe der zugehörigen Ringnuten ist. Dadurch wird erreicht, dass die O-Ringe in radialer Richtung aus den zugehörigen Ringnuten herausragen.

Ein weiteres bevorzugtes Ausführungsbeispiel der Fliehkraftpendeleinrichtung ist dadurch gekennzeichnet, dass die Ringnuten in der Nähe von den freien Enden der Endabschnitte angeordnet sind. Dabei ist wesentlich, dass die Ringnuten, zumindest teilweise, innerhalb von zugehörigen Durchgangslöchern angeordnet sind, die in den Pendelmassen für die Laufrollen vorgesehen sind.

Ein weiteres bevorzugtes Ausführungsbeispiel der Fliehkraftpendeleinrichtung ist dadurch gekennzeichnet, dass die Laufrollen zwischen dem Mittenabschnitt und den Endabschnitten jeweils einen Bund aufweisen, der unter Fliehkrafteinwirkung auf die Pendelmasse in axialer Richtung zwischen der Pendelmasse und der Pendelmassenträgereinrichtung angeordnet ist. Der Bund hat unter anderem die Funktion, im normalen Betrieb der Drehmomentübertragungseinrichtung zu verhindern, dass die Pendelmassen nicht in Kontakt mit der Pendelmassenträgereinrichtung kommen.

Ein weiteres bevorzugtes Ausführungsbeispiel der Fliehkraftpendeleinrichtung ist dadurch gekennzeichnet, dass sich der Bund in radialer Richtung nach außen hin verjüngt. Dadurch werden Beschädigungen des Bundes und/oder der Pendelmassenträgereinrichtung sicher verhindert.

Bei einer Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und mit einem Getriebe mit mindestens einer Getriebeeingangswelle und mit mindestens einer Kupplungseinrichtung und/oder mit mindestens einer Drehschwingungsdämpfungseinrichtung, ist die vorab angegebene Aufgabe durch eine vorab beschriebene Fliehkraftpendeleinrichtung gelöst. Die Fliehkraftpendeleinrichtung ist vorzugsweise zwischen der Kupplungseinrichtung und der Drehschwingungsdämpfungseinrichtung angeordnet.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Es zeigen:
- Figur 1: eine Fliehkraftpendeleinrichtung gemäß einem Ausführungsbeispiel der Erfindung in der Draufsicht;
- Figur 2: die Ansicht eines Schnitts entlang der Linie 11-11 in Figur 1 und
- Figur 3: einen vergrößerten Ausschnitt aus Figur 1.

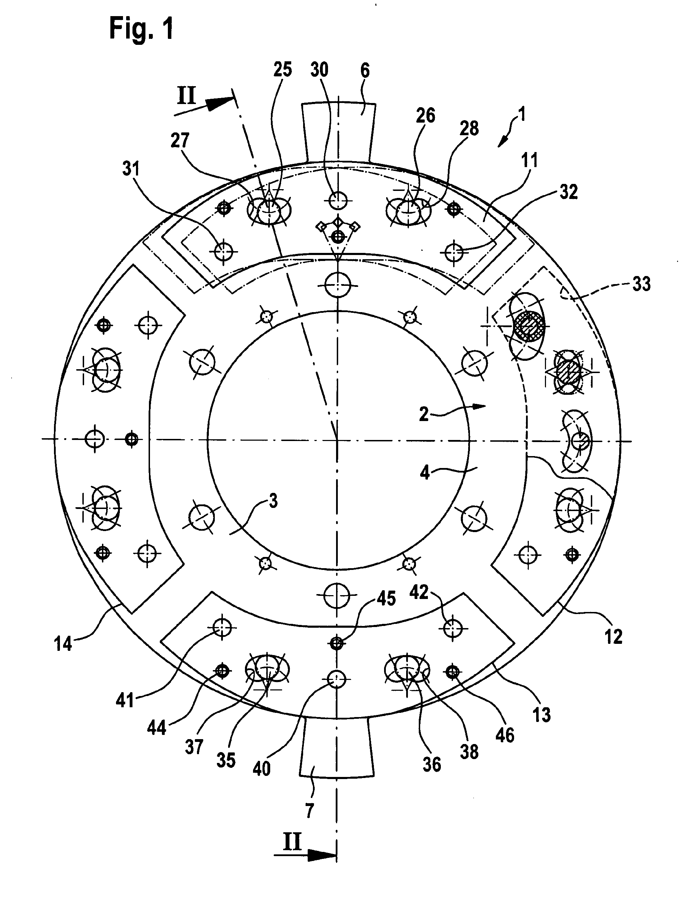

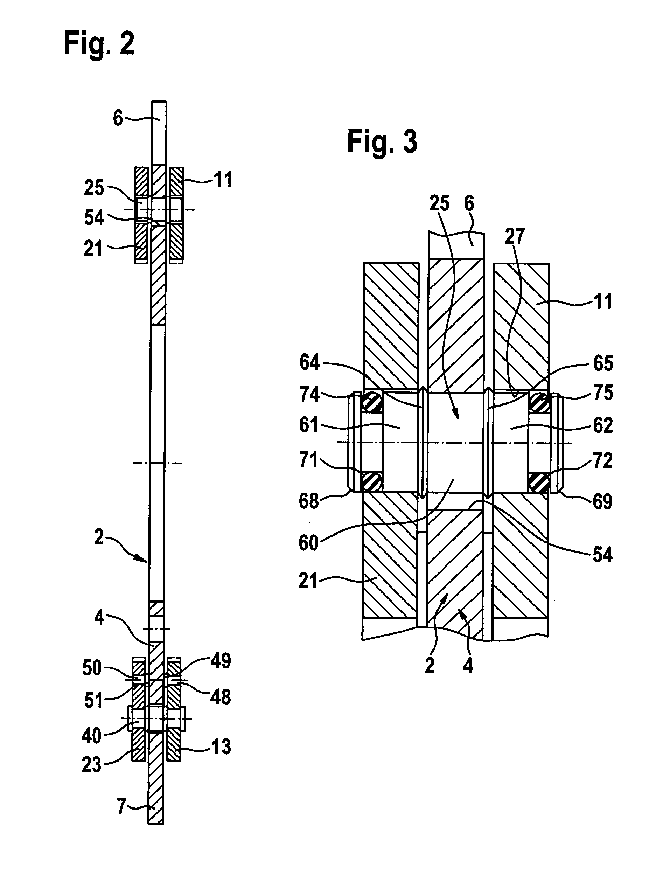

In den Figuren 1 und 2 ist eine Fliehkraftpendeleinrichtung 1 gemäß einem Ausführungsbeispiel der Erfindung in der Draufsicht und im Schnitt dargestellt. Die Fliehkraftpendeleinrichtung 1 umfasst eine Pendelmassenträgereinrichtung 2, die im Wesentlichen die Gestalt einer Kreisringscheibe 4 aufweist. Von der Kreisringscheibe 4 erstrecken sich zwei diametral angeordnete Ansätze 6, 7 radial nach außen. Die Ansätze 6, 7 weisen Anlageflächen für (nicht dargestellte) Bogenfedern einer Drehschwingungsdämpfungseinrichtung auf. In dem dargestellten Ausführungsbeispiel hat die Pendelmassenträgereinrichtung 2 gleichzeitig die Funktion eines Ausgangsflansches einer Drehschwingungsdämpfungseinrichtung und wird daher auch als Flansch bezeichnet.

Auf der in Figur 1 sichtbaren Oberfläche der Kreisringscheibe 4 sind vier Pendelmassen 11, 12, 13, 14 begrenzt bewegbar an der Pendelmassenträgereinrichtung 2 angebracht. In Figur 2 ist die Ansicht eines Schnitts entlang der Linie II-II in Figur 1 dargestellt. In der Schnittansicht sieht man, dass jeweils zwei Pendelmassen 11, 21, 13, 23 paarweise gegenüberliegend an der Pendelmassenträgereinrichtung 2 angebracht sind.

Die Bewegung der Pendelmassen 11, 21 eines Pendelmassenpaares wird, wie in Figur 1 gezeigt ist, durch Laufrollen 25, 26 ermöglicht, die in Laufbahnen 27, 28 geführt sind, die wiederum in der zugehörigen Pendelmasse 11 ausgespart sind. Die Laufbahnen 27, 28 werden von Durchgangslöchern gebildet, die sich in axialer Richtung durch die Pendelmasse 11 hindurch erstrecken und die Gestalt von Langlöchern aufweisen, die nierenförmig gekrümmt sind. Zur Anbringung der Pendel massen 11, 21 an der Pendelmassenträgereinrichtung 2 sind des Weiteren drei Stufenbolzen 30 bis 32 vorgesehen. Innerhalb eines gestrichelten Aufbruchs 33 sieht man, dass in der Kreisringscheibe 4 ebenfalls nierenförmig gekrümmte Langlöcher zur Aufnahme der Stufenbolzen ausgebildet sind.

Die Pendelmasse 13 ist mit Hilfe von Laufrollen 35, 36 an der Pendelmassenträgereinrichtung 2 angebracht. Die Bewegung der Laufrollen 35, 36 wird durch Laufbahnen 37, 38 begrenzt. Des Weiteren sind wie bei den anderen Pendelmassen drei Stufenbolzen 40 bis 42 vorgesehen. Die Laufrollen 35, 36 und die Stufenbolzen 40 bis 42 dienen dazu, die Bewegung der Pendelmassen 13, 23 in der Zeichenebene, also in radialer Richtung und in Umfangsrichtung zu begrenzen und zu definieren. Darüber hinaus sind an den Pendelmassen 13, 23 noch jeweils drei axiale Anlaufelemente 44 bis 46 angebracht. In Figur 2 sieht man, dass die axialen Anlaufelemente, die an den Pendelmassen 13, 23 angebracht sind, jeweils einen Bolzen 48, 50 mit einem Bolzenkopf 49, 51 aufweisen, der in axialer Richtung zwischen den Pendelmassen 13, 23 und der Kreisringscheibe 4 der Pendelmassenträgereinrichtung 2 angeordnet ist. Die axialen Anlaufelemente 44 bis 46 sind vorzugsweise aus Kunststoff gebildet, und dienen dazu, Geräusche zu reduzieren, die entstehen, wenn die Pendelmassen 13, 23 in axialer Richtung an der Kreisringscheibe 4 der Pendelmassenträgereinrichtung 2 anschlagen.

In Figur 3 sieht man, dass sich die Laufrolle 25 durch ein Durchgangsloch 54 hindurch erstreckt, das in der Pendelmassenträgereinrichtung 2 ausgespart ist. Die Laufrolle 25 weist einen Mittenabschnitt 60 auf, der in dem Durchgangsloch 54 angeordnet ist. Von dem Mittenabschnitt 60 gehen zwei Endabschnitte 61, 62 aus, die den gleichen Außendurchmesser wie der Mittenabschnitt 60 aufweisen. Die Abschnitte 60 bis 62 haben jeweils die Gestalt von geraden Kreiszylindern. Zwischen dem Mittenabschnitt 60 und dem Endabschnitt 61, 62 ist jeweils ein Bund 64, 65 ausgebildet. Die Bunde 64, 65 verjüngen sich radial nach außen und haben unter anderem die Funktion, im normalen Betrieb der Drehmomentübertragungseinrichtung zu verhindern, dass die Pendelmassen 11, 21 in Kontakt mit der Kreisringscheibe 4 der Pendelmassenträgereinrichtung 2 kommen.

Die Endabschnitte 61, 62 der Laufrolle 25 sind an ihren Enden jeweils mit einer Fase 68, 69 ausgestattet. In der Nähe der freien Enden der Endabschnitte 61, 62 ist jeweils eine Ringnut 71, 72 in dem zugehörigen Endabschnitt ausgespart. Die Ringnuten 71, 72 weisen jeweils einen rechteckigen Querschnitt auf. In den Ringnuten 71, 72 ist jeweils ein O-Ring 74, 75 aufgenommen. Die O-Ringe 74, 75 weisen einen kreisförmigen Querschnitt auf. Der Querschnitt der O-Ringe 74, 75 ist etwas größer als der zugehörige Nutquerschnitt, so dass die O-Ringe 74, 75 jeweils radial nach außen aus den zugehörigen Ringnuten 71, 72 heraus ragen.

Gemäß einem wesentlichen Aspekt der Erfindung ist die Laufrolle 25, die auch als Zylinderrolle bezeichnet wird, an ihren Enden mit jeweils einer Nut versehen. Vorzugsweise weisen die auf die Enden der Zylinderrolle 25 aufgezogenen O-Ringe 74, 75 einen Durchmesser auf, der etwa 0,4 mm größer als die an den Endabschnitten ausgebildete Lauffläche der Zylinderrolle 25 ist. Unter Fliehkraft werden die O-Ringe 74, 75 zusammengedrückt und die im Betrieb auftretende Pressung geht über die Lauffläche an die Endabschnitte 61, 62.

### Bezugszeichenliste

- 1.: Fliehkraftpendeleinrichtung
- 2.: Pendelmassenträgereinrichtung
- 4.: Kreisringscheibe
- 6.: radialer Ansatz
- 7.: radialer Ansatz
- 11.: Pendelmasse
- 12.: Pendelmasse
- 13.: Pendelmasse
- 14.: Pendelmasse
- 21.: Pendelmasse
- 23.: Pendelmasse
- 25.: Laufrolle
- 26.: Laufrolle
- 27.: Laufbahn
- 28.: Laufbahn
- 30.: Stufenbolzen
- 31.: Stufenbolzen
- 32.: Stufenbolzen
- 33.: Aufbruch
- 35.: Laufrolle
- 36.: Laufrolle
- 37.: Laufbahn
- 38.: Laufbahn
- 40.: Stufenbolzen
- 41.: Stufenbolzen
- 42.: Stufenbolzen
- 44.: axiales Anlaufelement
- 45.: axiales Anlaufelement
- 46.: axiales Anlaufelement

- 48.: Bolzen
- 49.: Bolzenkopf
- 50.: Bolzen
- 51.: Bolzenkopf
- 54.: Durchgangsloch
- 60.: Mittenabschnitt
- 61.: Endabschnitt
- 62.: Endabschnitt
- 64.: Bund
- 65.: Bund
- 68.: Fase
- 69.: Fase
- 71.: Ringnut
- 72.: Ringnut
- 74.: O-Ring
- 75.: O-Ring

## Patentansprüche

1. Fliehkraftpendeleinrichtung mit einer Pendelmassenträgereinrichtung (2), an der mehrere Pendelmassen (11-14, 21,23) mit Hilfe von Laufrollen (25,26,35,36) relativ zu der Pendelmassenträgereinrichtung (2) bewegbar angebracht sind, **dadurch gekennzeichnet, dass** die Laufrollen (25) mit mindestens einem O-Ring (74,75) ausgestattet sind, der an einer zugehörigen Pendelmasse (21,11) zur Anlage kommt.

2. Fliehkraftpendeleinrichtung nach Anspruch 1, **dadurch gekennzeichnet, dass** die Laufrollen (25) jeweils einen Mittenabschnitt (60) aufweisen, der sich durch die Pendelmassenträgereinrichtung (2) hindurch erstreckt und von dem sich zwei Endabschnitte (61,62), die jeweils mit einem O-Ring (74,75) ausgestattet sind, in zugehörige Pendelmassen (21,11) hinein erstrecken.

3. Fliehkraftpendeleinrichtung nach Anspruch 2, **dadurch gekennzeichnet, dass** die O-Ringe (74,75) jeweils in einer Ringnut (71,72) angeordnet sind, die in den Endabschnitten (61,62) vorgesehen ist.

4. Fliehkraftpendeleinrichtung nach Anspruch 3, **dadurch gekennzeichnet, dass** der Au-ßendurchmesser der O-Ringe (74,75) größer als der Außendurchmesser der Endabschnitte (61,62) ist.

5. Fliehkraftpendeleinrichtung nach Anspruch 4, **dadurch gekennzeichnet, dass** der Au-ßendurchmesser der O-Ringe (74,75) um etwa 0,4 mm größer als der Außendurchmesser der Endabschnitte (61,62) ist.

6. Fliehkraftpendeleinrichtung nach einem der Ansprüche 3 bis 5, **dadurch gekennzeichnet, dass** die Dicke der O-Ringe (74,75) größer als die Tiefe der zugehörigen Ringnuten (71,72) ist.

7. Fliehkraftpendeleinrichtung nach einem der Ansprüche 3 bis 6, **dadurch gekennzeichnet, dass** die Ringnuten (71,72) in der Nähe von den freien Enden der Endabschnitte (61,62) angeordnet sind.

8. Fliehkraftpendeleinrichtung nach einem der Ansprüche 3 bis 7, **dadurch gekennzeichnet, dass** die Laufrollen (25,26,35,36) zwischen dem Mittenabschnitt (60) und den Endabschnitten (61,62) jeweils einen Bund (64,65) aufweisen, der unter Fliehkrafteinwirkung auf die Pendelmasse (21,11) in axialer Richtung zwischen der Pendelmasse (21,11) und der Pendelmassenträgereinrichtung (2) angeordnet ist.

9. Fliehkraftpendeleinrichtung nach Anspruch 8, **dadurch gekennzeichnet, dass** sich der Bund (64,65) in radialer Richtung nach außen hin verjüngt.

10. Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit mindestens einer Getriebeeingangswelle, und mit mindestens einer Kupplungseinrichtung und/oder mit mindestens einer Drehschwingungsdämpfungseinrichtung, und mit einer Fliehkraftpendeleinrichtung (1) nach einem der vorhergehenden Ansprüche.
